# EUROPEAN PATENT APPLICATION

(11) **EP 4 019 274 A1**
(43) Date of publication of application: **29.06.2022**
(21) Application number: 20855717.3
(22) Date of filing: 19.08.2020
(51) Int. Cl.: B60C 1/00, C08L 9/00, C08L 9/06, B60C 11/03, B60C 11/12

(54) **PNEUMATIC TIRE**

(30) Priority: 21.08.2019 JP 2019151490
(71) Applicant: The Yokohama Rubber Co., Ltd., Tokyo 105-8685 (JP)
(72) Inventor: IIZUKA, Miyuki, Hiratsuka-shi, Kanagawa 254-8601 (JP)
(74) Representative: Schindelmann, Peter
(86) International application number: PCT/JP2020/031270
(87) International publication number: WO 2021/033713

(57) **Abstract**

To provide a pneumatic tire having excellent resistance to change over time, wear resistance, chipping resistance, and performance on snow. A pneumatic tire includes a rubber composition for a tire, where the rubber composition contains, per 100 parts by mass of a diene rubber containing from 50 to 70 mass% of a styrene-butadiene rubber having a weight average molecular weight of 800000 or greater and from 30 to 50 mass% of a butadiene rubber, from 100 to 150 parts by mass of silica, from 10 to 20 parts by mass of a low molecular weight butadiene rubber having a weight average molecular weight of 10000 or more and 50000 or less, from 2 to 9 parts by mass of a thermoplastic resin, and a plasticizer, and a total of the low molecular weight butadiene rubber and the plasticizer is from 40 to 70 parts by mass.

## Description

### Technical Field

The present invention relates to a pneumatic tire having excellent resistance to change over time, wear resistance, chipping resistance, and performance on snow.

### Background Art

All-season tires mounted on a high performance vehicle have been required to have durability (resistance to change over time) and wear resistance that allow a long-term use and high chipping resistance that prevents damage received on bad roads, in addition to excellent dry grip performance, wet grip performance, and performance on snow to enhance safety. However, it is difficult to provide these characteristics in a compatible manner to a high degree because these characteristics are contrary to each other. For example, when the blended amount of silica is increased in the rubber composition for a tire to enhance wet grip performance, rubber hardness is increased and rigidity is increased, and thus performance on snow is lowered. On the other hand, when attempting to lower the rubber hardness by increasing the blended amount of a plasticizer to maintain the performance on snow, strength of the rubber composition is lowered, and degradation of wear resistance and chipping resistance is concerned. Furthermore, there are problems in that changes from the designed characteristics are concerned, such as performance on snow, due to decrease of the content of a plasticizer caused by a continuous long-term use.

Patent Document 1 describes that a tire for all seasons, the tire prioritizing wet grip performance, grip performance on ice, and low rolling resistance, is produced by a rubber composition which contains a natural rubber, a butadiene rubber, a styrene-butadiene rubber, silica, and a plasticizer and in which contents of these satisfy a special relationship formula. However, performance required for a pneumatic tire for all seasons by consumers is even higher, especially the requirement of combining resistance to change over time, wear resistance, chipping resistance, and performance on snow, and thus further enhancement has been demanded.

### Citation List

### Patent Literature

Patent Document 1: JP 6329187 B

### Summary of Invention

### Technical Problem

An object of the present invention is to provide a pneumatic tire having excellent resistance to change over time, wear resistance, chipping resistance, and performance on snow.

### Solution to Problem

The pneumatic tire according to an embodiment of the present invention that achieves the object described above is formed from a rubber composition for a tire, where the rubber composition contains, per 100 parts by mass of a diene rubber containing from 50 to 70 mass% of a styrene-butadiene rubber having a weight average molecular weight of 800000 or greater and from 30 to 50 mass% of a butadiene rubber, from 100 to 150 parts by mass of silica, from 10 to 20 parts by mass of a low molecular weight butadiene rubber having a weight average molecular weight of 10000 or more and 50000 or less, from 2 to 9 parts by mass of a thermoplastic resin, and a plasticizer, and a total of the low molecular weight butadiene rubber and the plasticizer is from 40 to 70 parts by mass.

### Advantageous Effects of Invention

According to the pneumatic tire of an embodiment of the present invention, because the pneumatic tire is formed from the rubber composition for a tire described above, a rubber composition for a tire having excellent resistance to change over time as well as excellent wear resistance, chipping resistance, and performance on snow can be obtained.

The rubber composition for a tire preferably has the mass ratio of the low molecular weight butadiene rubber of 0.1 or greater and 0.4 or less with respect to the total amount of the low molecular weight butadiene rubber and the plasticizer, and thus can suppress change over time during use for a long period of time and maintain excellent balance among wear resistance, chipping resistance, and performance on snow for a long term.

The CTAB adsorption specific surface area of the silica is preferably 130 m²/g or greater and 180 m²/g or less, and excellent performance on snow can be achieved.

It is preferable that a tread pattern of the pneumatic tire includes three or more circumferential main grooves extending in a tire circumferential direction and a land portion defined by two of the circumferential main grooves that are adjacent, an end portion on an outer side in the tire width direction of the land portion has a zigzag shape having a position periodically changing in the tire width direction, and an edge on an inner side in the tire width direction of the land portion has a straight shape, a plurality of lug grooves are provided in the land portion, and between the lug grooves that are adjacent, a sipe extending continuously from the end portion on the outer side in the tire width direction to the end portion on the inner side in the tire width direction is provided, the sipe has a substantially Z-shape having two bent portions, and the bent portions are located on the inner side in the tire width direction than a center line in the tire width direction of the land portion. Accordingly, superior balance between the chipping resistance and the performance on snow can be achieved.

The pneumatic tire according to an embodiment of the present invention has excellent performances as the pneumatic tire for all seasons and, in particular, by forming the tread portion thereof by the rubber composition for a tire, excellent wear resistance, chipping resistance, and performance on snow as well as resistance to change over time can be provided in a compatible manner at a high level.

### Brief Description of Drawings

FIG. 1 is a cross-sectional view in a tire meridian direction illustrating a pneumatic tire according to an embodiment of the present invention.
FIG. 2 is an enlarged view of a part of a middle land portion of the tread pattern of the pneumatic tire illustrated in FIG. 1.

### Description of Embodiments

The pneumatic tire according to an embodiment of the present invention has a member formed from a rubber composition. This rubber composition contains, per 100 parts by mass of a diene rubber containing from 50 to 70 mass% of a styrene-butadiene rubber and from 30 to 50 mass% of a butadiene rubber, from 100 to 150 parts by mass of silica, from 10 to 20 parts by mass of a low molecular weight butadiene rubber, from 2 to 9 parts by mass of a thermoplastic resin, and a plasticizer. Note that the total amount of the low molecular weight butadiene rubber and the plasticizer is from 40 to 70 parts by mass. Furthermore, the weight average molecular weight of the styrene-butadiene rubber is 800000 or more, and the weight average molecular weight of the low molecular weight butadiene rubber is 10000 or greater and 50000 or less.

The diene rubber is formed from a styrene-butadiene rubber and a butadiene rubber. The styrene-butadiene rubber may be either a solutionpolymerized styrene-butadiene rubber or an emulsion-polymerized styrene-butadiene rubber or may be a modified styrene-butadiene rubber having a functional group. The weight average molecular weight of the styrene-butadiene rubber is 800000 or greater, preferably 800000 or greater and 1500000 or less, and more preferably 900000 or greater and 1300000 or less. Blending of the styrene-butadiene rubber having a weight average molecular weight of 800000 or greater can enhance rubber strength and enhance durability and chipping resistance. In the present specification, the weight average molecular weight can be measured by gel permeation chromatography (GPC) calibrated with polystyrene standards.

The content of the styrene-butadiene rubber is 50 mass% or greater and 70 mass% or less, preferably from 55 to 70 mass%, and more preferably from 58 to 70 mass%, per 100 mass% of the diene rubber. When the content of the styrene-butadiene rubber is less than 50 mass%, durability and chipping resistance are lowered. When the content is more than 70 mass%, performance on snow cannot be adequately enhanced.

The butadiene rubber is not particularly limited as long as the butadiene rubber is one that is typically used for a rubber composition for a tire. Because the butadiene rubber has a low glass transition temperature, the butadiene rubber can enhance performance on snow by being blended in a rubber composition for a tire. The content of the butadiene rubber is 30 mass% or greater and 50 mass% or less, preferably from 30 to 45 mass%, and more preferably from 30 to 40 mass%, per 100 mass% of the diene rubber. When the content of the butadiene rubber is less than 30 mass%, performance on snow cannot be adequately enhanced. When the content of the butadiene rubber is more than 50 mass%, durability and chipping resistance are lowered.

In the rubber composition for a tire, the diene rubber contains the styrene-butadiene rubber and the butadiene rubber; however, reuse is not prohibited in mixing or molding. For example, when a tread portion is greenmolded by winding an unvulcanized sheet formed from the rubber composition around a predetermined position on a forming drum, a small piece of the unvulcanized sheet cut off before and after the winding of the unvulcanized sheet is sometimes reused in the process. At this time, the small piece of the unvulcanized sheet can be blended during the preparation of the rubber composition for a tire, so long as the objects of the present invention are not hindered. In the rubber composition for a tire, preferably 5 mass% or less, and more preferably 3 mass% or less, of another diene rubber contained in small pieces of the unvulcanized sheet (e.g., natural rubber and butyl rubber) may be contained per 100 mass% of the diene rubber.

The rubber composition for a tire contains silica. Examples of the silica include wet silica (hydrous silicic acid), dry silica (silicic anhydride), calcium silicate, and aluminum silicate. One type of these can be used alone, or a combination of two or more types of these can be used. Furthermore, surface-treated silica, in which the surface of silica is surface-treated by a silane coupling agent, may be also used.

From 100 to 150 parts by mass, preferably from 100 to 130 parts by mass, and more preferably from 105 to 125 parts by mass, of the silica is blended per 100 parts by mass of the diene rubber. Setting the blended amount of the silica to 100 parts by mass or more can enhance dry grip performance, wet grip performance, and low rolling resistance. Furthermore, setting the blended amount of the silica to 150 parts by mass or less can make dispersibility of silica excellent.

The CTAB adsorption specific surface area of the silica is not particularly limited, and is preferably from 130 to 180 m²/g, and more preferably from 145 to 175 m²/g. By setting the CTAB adsorption specific surface area of the silica to 130 m²/g or more, wet grip performance of the rubber composition can be ensured. Furthermore, by setting the CTAB adsorption specific surface area of the silica to 180 m²/g or less, good performance on snow can be achieved. In the present specification, the CTAB adsorption specific surface area of silica is a value measured in accordance with ISO 5794.

The rubber composition for a tire can contain another filler besides the silica. Examples of such another filler include carbon black, calcium carbonate, magnesium carbonate, talc, clay, alumina, aluminum hydroxide, titanium oxide, and calcium sulfate. Among these, carbon black is preferred. One type of these other fillers can be used alone, or a combination of two or more types of these can be used.

Preferably, by allowing the rubber composition for a tire to contain a silane coupling agent, good dispersibility of the silica can be achieved. The blended amount of the silane coupling agent is preferably from 4 to 20 mass%, and more preferably from 5 to 15 mass%, of the mass of the silica. When the blended amount of the silane coupling agent is less than 4% by mass, the dispersibility of the silica may fail to be sufficiently enhanced. When the blended amount of the silane coupling agent is greater than 20 mass%, premature cure tends to occur in the rubber composition, and the forming processability tends to be degraded.

The silane coupling agent is not particularly limited as long as the silane coupling agent is one that can be used for a rubber composition for a tire. Examples thereof include sulfur-containing silane coupling agents such as bis(3-triethoxysilylpropyl)tetrasulfide, bis(3-triethoxysilylpropyl)disulfide, 3-trimethoxysilylpropyl benzothiazole tetrasulfide, γ-mercaptopropyl triethoxysilane, and 3-octanoylthiopropyl triethoxysilane. Among these, the silane coupling agent having a mercapto group is preferred, and the affinity with the silica can be enhanced, and the dispersibility can be improved. One type of these silane coupling agents can be blended alone, or a combination of multiple types of these can be blended.

By blending the low molecular weight butadiene rubber having the weight average molecular weight of 10000 or greater and 50000 or less, the rubber composition for a tire can suppress change over time during use for a long period of time and maintain excellent wear resistance, chipping resistance, and performance on snow for a long term. The weight average molecular weight of the low molecular weight butadiene rubber is 10000 or more and 50000 or less, preferably from 15000 to 45000, and more preferably from 20000 to 40000. When the weight average molecular weight of the low molecular weight butadiene rubber is less than 10000, change of physical properties over time cannot be suppressed. Furthermore, when the weight average molecular weight of the low molecular weight butadiene rubber is greater than 50000, it becomes difficult to ensure performance on snow. The low molecular weight butadiene rubber having the weight average molecular weight of 10000 or greater and 50000 or less can be appropriately selected from commercially available low molecular weight butadiene rubbers and used. Note that, in the present specification, the low molecular weight butadiene rubber is different from the diene rubber and the butadiene rubber, and the blended amount of the low molecular weight butadiene rubber is not included in the amounts of the diene rubber and the butadiene rubber.

From 10 to 20 parts by mass, preferably from 10 to 18 parts by mass, and more preferably from 12 to 18 parts by mass, of the low molecular weight butadiene rubber is blended per 100 parts by mass of the diene rubber. When the amount of the low molecular weight butadiene rubber is less than 10 parts by mass, effect of suppressing change of physical properties over time cannot be adequately achieved. Furthermore, when the amount of the low molecular weight butadiene rubber is more than 20 parts by mass, chipping resistance cannot be adequately achieved.

The rubber composition for a tire contains a plasticizer as well as the low molecular weight butadiene rubber. By the plasticizer, superior performance on snow can be achieved. Examples of the plasticizer include natural oils and synthetic oils.

For the blended amount of the plasticizer, the total amount of the low molecular weight butadiene rubber and the plasticizer is from 40 to 70 parts by mass, preferably from 40 to 65 parts by mass, and more preferably from 40 to 60 parts by mass, per 100 parts by mass of the diene rubber. When the total amount of the low molecular weight butadiene rubber and the plasticizer is less than 40 parts by mass, performance on snow is lowered. Furthermore, when the total amount of the low molecular weight butadiene rubber and the plasticizer is more than 70 parts by mass, wear resistance and chipping resistance are lowered. Note that, in the present specification, when the diene rubber contains an oil-extending component, the content of the oil-extending component is also included in the blended amount of the plasticizer.

The mass ratio of the low molecular weight butadiene rubber to the total amount of the low molecular weight butadiene rubber and the plasticizer is 0.1 or more and 0.4 or less, preferably 0.2 or greater and 0.4 or less, and more preferably 0.2 or greater and 0.3 or less. Setting the mass ratio of the low molecular weight butadiene rubber to 0.1 or more is preferred because the effect of suppressing change of physical properties over time becomes greater. Furthermore, setting the mass ratio of the low molecular weight butadiene rubber to 0.4 or less is preferred because superior performance on snow can be achieved.

By blending a thermoplastic resin, the rubber composition for a tire can suppress change of physical properties over time while achieving superior performance on snow. From 2 to 9 parts by mass, preferably from 3 to 9 parts by mass, and more preferably from 4 to 8 parts by mass, of the thermoplastic resin is blended per 100 parts by mass of the diene rubber. When the amount of the thermoplastic resin is less than 2 parts by mass, excellent performance on snow cannot be achieved, and change of physical properties over time cannot be suppressed. Furthermore, when the amount of the thermoplastic resin is more than 9 parts by mass, performance on snow cannot be adequately achieved.

The type of the thermoplastic resin is not particularly limited, and examples thereof include natural resins such as terpene resins and rosin resins; synthetic resins such as petroleum resins, carboniferous resins, phenol resins, and xylene resins; and modified products thereof. Among these, terpene resins and/or petroleum resins are preferable and modified products of terpene resins are more preferable.

Preferably, examples of the terpene resins include α-pinene resin, β-pinene resin, limonene resin, hydrogenated limonene resin, dipentene resin, terpene phenol resin, terpene styrene resin, aromatic modified terpene resin, hydrogenated terpene resin, and the like. Among these, aromatic modified terpene resins are preferable, and examples thereof include aromatic modified terpene resins obtained by polymerizing a terpene such as α-pinene, β-pinene, dipentene, limonene, and the like, and an aromatic compound such as styrene, phenol, α-methylstyrene, vinyl toluene, and the like.

Examples of the petroleum resin include aromatic hydrocarbon resins or, alternatively, saturated or unsaturated aliphatic hydrocarbon resins. Examples thereof include C5 petroleum resins (aliphatic petroleum resins formed by polymerizing fractions such as isoprene, 1,3-pentadiene, cyclopentadiene, methylbutene, pentene, and the like), C9 petroleum resins (aromatic petroleum resins formed by polymerizing fractions such as α-methylstyrene, o-vinyl toluene, m-vinyl toluene, p-vinyl toluene, and the like), C5C9 copolymerization petroleum resins, and the like.

The rubber composition for a tire may also contain various additives that are commonly used in the rubber composition for a tire within a range that does not impair the object of the present invention. Examples thereof include a vulcanization or crosslinking agent, a vulcanization accelerator, an anti-aging agent, a plasticizer, a processing aid, a liquid polymer, a terpene resin, and a thermosetting resin. These additives may be kneaded by any commonly known method to form a rubber composition, and can be used for vulcanization or crosslinking. Blended amounts of these additives may be any known conventional amount, so long as the objects of the present invention are not hindered.

The pneumatic tire according to an embodiment of the present invention has, for example, a tread portion or side portion formed by molding the rubber composition for a tire described above and has excellent balance among resistance to change over time, wear resistance, chipping resistance, and performance on snow to a high degree. The pneumatic tire preferably has excellent performances as the pneumatic tire for all seasons and, in particular, has the tread portion formed by molding the rubber composition for a tire. The pneumatic tire for all seasons is a significantly high performance tire having excellent resistance to change over time, wear resistance, chipping resistance, and performance on snow.

Although the tread pattern of the pneumatic tire is not particularly limited, it is preferable that the tread pattern of the pneumatic tire includes three or more circumferential main grooves extending in a tire circumferential direction, and a land portion defined by two of the circumferential main grooves that are adjacent, an end portion on an outer side in a tire width direction of the land portion has a zigzag shape having a position periodically changing in the tire width direction, and an edge on an inner side in the tire width direction of the land portion has a straight shape, a plurality of lug grooves are provided in the land portion, and between the lug grooves that are adjacent, a sipe extending continuously from the end portion on the outer side in the tire width direction to the end portion on the inner side in the tire width direction is provided, the sipe has a substantially Z-shape having two bent portions, and the bent portions are located on the inner side in the tire width direction than a center line in the tire width direction of the land portion. Accordingly, superior balance between the chipping resistance and the performance on snow can be achieved.

The tire internal structure described below represents a typical example for a pneumatic tire, and the pneumatic tire according to an embodiment of the present invention is not limited thereto.

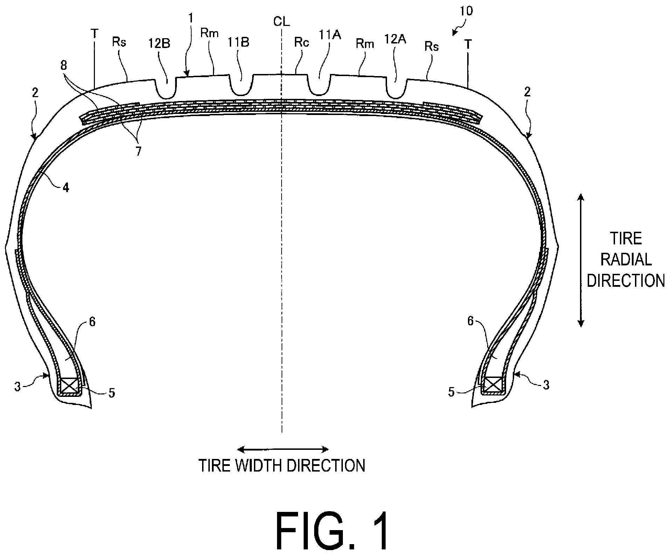

FIG. 1 is a cross-sectional view in a tire meridian direction illustrating a pneumatic tire according to an embodiment of the present invention. FIG. 1 is a cross-sectional view of a half region in a tire radial direction. Additionally, FIG. 1 illustrates a radial tire for a passenger vehicle as an example of a pneumatic tire.

"Cross-section in the tire meridian direction" refers to a cross section of the tire taken along a plane that includes the tire rotation axis (not illustrated). A reference sign CL denotes a tire equatorial plane and refers to a plane perpendicular to the tire rotation axis that passes through the center point of the tire in a tire rotation axis direction. "Tire radial direction" refers to the direction orthogonal to the rotation axis (not illustrated) of a pneumatic tire 10, "inner side in the tire radial direction" refers to the side toward the rotation axis in the tire radial direction, "outer side in the tire radial direction" refers to the side away from the rotation axis in the tire radial direction. In addition, "tire circumferential direction" refers to the circumferential direction with the rotation axis as the center axis. In addition, "tire width direction" refers to a direction parallel with the tire rotation axis. "Inner side in the tire width direction" refers to the side toward the tire equatorial plane CL in the tire width direction, and "outer side in the tire width direction" refers to the side away from the tire equatorial plane CL in the tire width direction.

"Tire equatorial plane CL" refers to a plane orthogonal to the rotation axis of the pneumatic tire 10 that passes through the center of the tire width of the pneumatic tire 10. "Tire width" is the width in the tire width direction between components located on outer sides in the tire width direction, or in other words, the distance between the components that are the most distant from the tire equatorial plane CL in the tire width direction. "Tire equator line" refers to a line along the tire circumferential direction of the pneumatic tire 10 that lies on the tire equatorial plane CL. In the present embodiment, the tire equator line and the tire equatorial plane are denoted by the same reference sign CL.

As illustrated in FIG. 1, the pneumatic tire 10 according to the present embodiment includes an annular tread portion 1 extending in the tire circumferential direction, a pair of sidewall portions 2, 2 disposed on both sides of the tread portion 1, and a pair of bead portions 3, 3 disposed on the inner side in the tire radial direction of the pair of sidewall portions 2.

A carcass layer 4 is mounted between the pair of bead portions 3, 3. The carcass layer 4 includes a plurality of reinforcing cords extending in the tire radial direction and is folded back around a bead core 5 disposed in each of the bead portions 3 from a tire inner side to a tire outer side. A bead filler 6 having a triangular cross-sectional shape and formed of a rubber composition is disposed on the outer circumference of the bead core 5.

On the other hand, a plurality of belt layers 7 are embedded on the outer circumferential side of the carcass layer 4 in the tread portion 1. Each of the belt layers 7 includes a plurality of reinforcing cords that are inclined with respect to the tire circumferential direction, and the reinforcing cords are disposed so as to intersect each other between the layers. In the belt layers 7, the inclination angle of the reinforcing cords with respect to the tire circumferential direction is set to fall within a range of from 10° to 40°, for example. Steel cords are preferably used as the reinforcing cords of the belt layers 7. To improve high-speed durability, at least one belt cover layer 8, formed by disposing reinforcing cords at an angle of, for example, not greater than 5° with respect to the tire circumferential direction, is disposed on an outer circumferential side of the belt layers 7. Organic fiber cords such as nylon and aramid are preferably used as the reinforcing cords of the belt cover layer 8.

The pneumatic tire 10 includes four circumferential main grooves 11A, 11B, 12A, and 12B in the tread portion 1. The circumferential main grooves 12A and 12B extend in the tire circumferential direction at positions on an outer side of the tire equatorial plane CL in the tire width direction. The circumferential main groove 11A extends in the tire circumferential direction at a position closer to the tire equatorial plane CL than the circumferential main groove 12A. The circumferential main groove 11B extends in the tire circumferential direction at a position closer to the tire equatorial plane CL than the circumferential main groove 12B.

A center land portion Rc is defined by the two circumferential main grooves 11A and 11B. In addition, one middle land portion Rm is defined by the two circumferential main grooves 11A and 12A, and the other middle land portion Rm is defined by the two circumferential main grooves 11B and 12B. One shoulder land portion Rs is on an outer side of the circumferential main groove 12A in the tire width direction. The other shoulder land portion Rs is on an outer side of the circumferential main groove 12B in the tire width direction. Note that when three circumferential main grooves are provided, no center land portion Rc is provided, and the tread portion includes: the middle land portions Rm on both sides of the equator line CL; and the shoulder land portions Rs each on an outer side of the middle land portions Rm in the tire width direction.

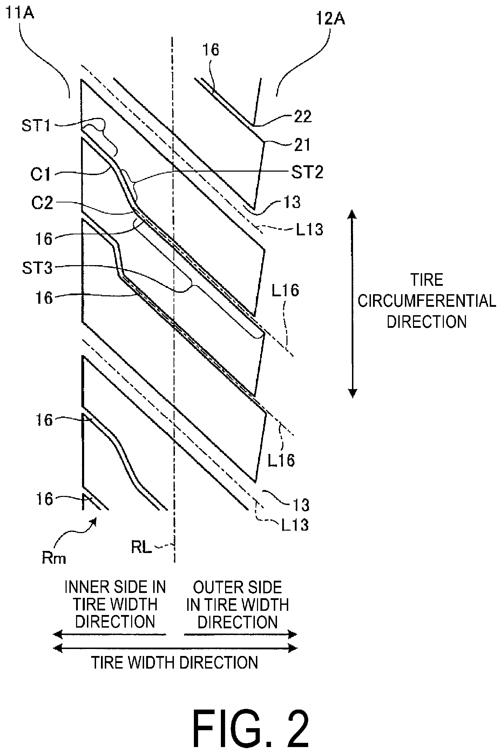

FIG. 2 is an enlarged view of a part of the middle land portion Rm (hereinafter, also simply referred to as land portion Rm) of the tread pattern of the pneumatic tire of FIG. 1. The land portion Rm has a plurality of lug grooves 13. The lug grooves 13 extend in the tire width direction and the tire circumferential direction. One end of the lug groove 13 is open to the circumferential main groove 11A (or 11B). The other end of the lug groove 13 is open to the circumferential main groove 12A (or 12B). The land portion Rm includes a plurality of sipes 16 between the adjacent lug grooves 13 in the tire circumferential direction. The sipes 16 extend in the tire circumferential direction and the tire width direction. One end of the sipe 16 is connected to the circumferential main groove 11A (or 11B), and the other end of the sipe 16 is connected to the circumferential main groove 12A (or 12B). The sipe 16 is a through sipe extending through the land portion Rm.

In the present example, an edge on an outer side of the land portion Rm in the tire width direction, in other words, the edge on the circumferential main groove 12A (or 12B) side, has a zigzag shape. The zigzag shape is a shape with recesses/protrusions that has a position periodically changing in the tire width direction. An edge on an inner side of the land portion Rm in the tire width direction, in other words, an edge on the circumferential main groove 11A (or 11B) side, has a straight shape that does not have recess/protrusion.

In the land portion Rm, preferably, two or more of the sipes 16 are provided between the adjacent lug grooves 13, and three or more protrusion portions of the zigzag shape are provided between the adjacent lug grooves 13. When there are less than two sipes 16 between the adjacent lug grooves 13, the number of the protrusion portions of the zigzag shape is reduced and snow performance does not improve, which is not preferable.

Additionally, respective linear portions ST3 of the plurality of sipes 16 are parallel to each other. Here, "parallel" means that an angle formed by two straight lines L16 that extend the respective center lines of the two sipes 16 is within ± 5°. When the two straight lines L16 are completely parallel, the angle formed by the two straight lines L16 is 0°.

Furthermore, the plurality of lug grooves 13 are parallel to each other. Here, "parallel" means that an angle formed by two straight lines L13 that extend the respective center lines of the two lug grooves 13 is within ± 5°. When the two straight lines L13 are completely parallel, the angle formed by the two straight lines L13 is 0°.

In FIG. 2, one end of the sipe 16 is connected to the circumferential main groove 11A, and the other end is connected to the circumferential main groove 12A. The sipe 16 of the present example includes linear portions ST1, ST2, and ST3, and bent portions C1 and C2. The linear portion ST1 is disposed on the circumferential main groove 11A side, in other words, on the inner side in the tire width direction. The linear portion ST1 is connected to the edge on the inner side of the land portion Rm in the tire width direction. The linear portion ST3 is disposed on the circumferential main groove 12A side, in other words, on the outer side in the tire width direction. The linear portion ST3 is connected to the edge on the outer side of the land portion Rm in the tire width direction. A length of the linear portion ST1 in the extension direction is shorter than a length of the linear portion ST3 in the extension direction.

One end of the linear portion ST1 is connected to the circumferential main groove 11A, and the other end of the linear portion ST1 is connected to one end of the bent portion C1. The other end of the bent portion C1 is connected to the linear portion ST2. One end of the linear portion ST3 is connected to the circumferential main groove 12A, and the other end of the linear portion ST3 is connected to one end of the bent portion C2. The other end of the bent portion C2 is connected to the linear portion ST2. In this way, the bent portion C1 is provided between the linear portion ST1 and the linear portion ST2 and the bent portion C2 is provided between the linear portion ST2 and the linear portion ST3, and thus the sipe 16 has a substantially Z-shape. The Z-shape is a shape including at least two bent portions and having the linear portions connected to each other by the bent portions. Note that the Z-shape may include an S-shape formed of an arc.

For the tread pattern, the edge effect is increased by providing a zigzag groove and the sipe 16 having a substantially Z-shape. When the bend point having the substantially Z-shape and the zigzag portion are in close proximity, the block rigidity at or near the zig-zag portion decreases, and chipping may occur. Thus, by providing the bend point of the sipe 16 and the zigzag portion at separated positions, the snow performance and the chipping resistance performance can be provided in a compatible manner.

Embodiments according to the present invention are further described below by Examples. However, the scope of the present invention is not limited to these Examples.

### Example

Each of rubber compositions for a tire (Examples 1 to 6, Standard Example, and Comparative Examples 1 to 9) was prepared according to the formulations shown in Tables 1 and 2 with the compounding agents shown in Table 3 used as common components. With the exception of the sulfur and the vulcanization accelerator, the components were kneaded in a 1.7 L sealed Banbury mixer for 5 minutes, then discharged from the mixer, and cooled at room temperature. This was placed in the 1.7 L sealed Banbury mixer, and the sulfur and the vulcanization accelerators were then added and mixed, and thus a rubber composition for a tire was prepared. Furthermore, the blended amounts of the compounding agents shown in Table 3 are expressed as values in part by mass per 100 parts by mass of the diene rubbers shown in Tables 1 and 2.

The obtained rubber composition for a tire was press-vulcanized using a predetermined mold at 160°C for 20 minutes to manufacture a vulcanized rubber test piece, and resistance to change over time (rate of change of rubber hardness before and after heat aging) and wear resistance were evaluated.

### Resistance to change over time (rate of change of rubber hardness before and after heat aging)

By using the obtained vulcanized rubber test piece, a plurality of test pieces for rubber hardness measurement were prepared in accordance with JIS K 6253. The rubber hardness of some of the test pieces was measured in accordance with JIS K 6253 using a type A durometer at 23°C. This rubber hardness was used as rubber hardness R0 before aging. The other test pieces were subjected to deterioration acceleration test in an environment at a temperature of 80°C for 168 hours and then allowed to stand still in a constant temperature and constant humidity environment at 23°C for 48 hours. The rubber hardness was then measured in accordance with JIS K 6253 using a type A durometer at 23°C. This rubber hardness was used as rubber hardness R1 after the aging. From the obtained rubber hardnesses R0 and R1, the rate of change before and after the heat aging of the rubber hardness [(R1 - R0)/R0 × 100 (%)] was calculated. The obtained results are represented by index values with the value of Standard Example being assigned 100 and are shown in the "Resistance to change over time" rows of Tables 1 and 2. A smaller value of this index value indicates less change in physical properties over time and superior resistance to change over time.

### Wear Resistance

The amount of wear of the obtained vulcanized rubber test piece was measured in accordance with JIS K 6264, using a Lambourn abrasion test machine (available from Iwamoto Seisakusho Co. Ltd.) under the following conditions: temperature of 20°C, load of 39 N, slip rate of 30%, and time of 4 minutes. The obtained results are represented by index values with the reciprocal of the value of Standard Example being assigned 100 and are indicated in the "Wear resistance" rows of Tables 1, 2. Larger index values indicate superior wear resistance.

Sixteen types of pneumatic tires, in which the rubber composition for a tire obtained as described above was used in a tread rubber (tire size: 225/65R17 102H) were vulcanization-molded, and chipping resistance and performance on snow were measured by the following test methods. Note that, for pneumatic tires of Examples except Example 2; Standard Example; and Comparative Examples, for the middle land portion corresponding to that in FIG. 2, an end portion on the inner side in the tire width direction (that is, the center side) and an end portion on the outer side in the tire width direction (that is, the shoulder side) had straight shapes, and the sipe of the middle land portion had a straight shape. Meanwhile, for the pneumatic tire of Example 2, an end portion on the inner side in the tire width direction (that is, the center side) of the middle land portion corresponded to that in FIG. 2 had a straight shape, but an end portion on the outer side in the tire width direction (that is, the shoulder side) of the middle land portion had a zigzag shape with recesses/protrusions that has a position periodically changing in the tire width direction, and the sipe of the middle land portion had a substantially Z-shape.

### Chipping Resistance

The pneumatic tire obtained as described above was mounted on a standard rim, inflated to an air pressure of 230 kPa, and mounted on a test vehicle. The test vehicle was driven on a course having an off-road surface, and the number of chipping on the tread surface was measured after traveling for 450 laps. Each of the obtained results was expressed as an index value obtained by calculating a reciprocal thereof, with Standard Example being assigned the value of 100, and shown in rows of "Chipping resistance" in Tables 1 and 2. A larger index value indicates smaller number of chipping of the tread surface and indicates being superior.

### Performance on Snow

The pneumatic tire obtained as described above was mounted on a standard rim, inflated to an air pressure of 230 kPa, and mounted on a test vehicle. The test vehicle traveled on a road surface covered with pressed snow, and a braking distance when the test vehicle braked at an initial speed of 40 km/hour was measured. Each of the obtained results is expressed as an index value obtained by calculating a reciprocal thereof, with Standard Example being assigned the value of 100, and shown in rows of "Performance on snow" in Tables 1 and 2. A larger index value indicates a shorter braking distance and indicates being superior.

**[Table 1-1]**

| (Blend) | | Standard Example | Comparative Example 1 | Example 1 | Example 2 |
|---|---|---|---|---|---|
| SBR-1 | Parts by mass | 70 | 70 | 70 | 70 |
| SBR-2 | Parts by mass | | | | |
| BR | Parts by mass | 30 | 30 | 30 | 30 |
| Silica-1 | Parts by mass | 80 | 110 | 110 | 110 |
| Silica-2 | Parts by mass | | | | |
| Silica-3 | Parts by mass | | | | |
| Carbon black | Parts by mass | 10 | 10 | 10 | 10 |
| Coupling agent | Parts by mass | 6.4 | 8.8 | 8.8 | 8.8 |
| Liquid BR-1 | Parts by mass | | | 10 | 10 |
| Liquid BR-2 | Parts by mass | | | | |
| Plasticizer | Parts by mass | 35 | 50 | 35 | 35 |
| Aromatic modified terpene resin | Parts by mass | | 5 | 5 | 5 |
| Total of liquid BR and plasticizer | (parts by mass) | (35) | (50) | (45) | (45) |
| Proportion of liquid BR in the above | (-) | 0.00 | 0.00 | (0.22) | (0.22) |
| Shape of end portion on inner side in width direction of middle land portion | | Straight | Straight | Straight | Straight |
| Shape of end portion on outer side in width direction of middle land portion | | Straight | Straight | Straight | Zigzag |
| Sipe shape of middle land portion | | Straight | Straight | Straight | Substantially Z-shape |
| Resistance to change over time | Index value | 100 | 110 | 101 | 101 |
| Wear resistance | Index value | 100 | 98 | 102 | 102 |
| Chipping resistance | Index value | 100 | 96 | 101 | 102 |
| Performance on snow | Index value | 100 | 98 | 100 | 103 |

**[Table 1-2]**

| (Blend) | | Example 3 | Example 4 | Example 5 | Example 6 |
|---|---|---|---|---|---|
| SBR-1 | Parts by mass | 70 | 70 | 70 | 70 |
| SBR-2 | Parts by mass | | | | |
| BR | Parts by mass | 30 | 30 | 30 | 30 |
| Silica-1 | Parts by mass | | | 110 | 110 |
| Silica-2 | Parts by mass | 110 | | | |
| Silica-3 | Parts by mass | | 110 | | |
| Carbon black | Parts by mass | 10 | 10 | 10 | 10 |
| Coupling agent | Parts by mass | 8.8 | 8.8 | 8.8 | 8.8 |
| Liquid BR-1 | Parts by mass | 10 | 10 | 15 | 15 |
| Liquid BR-2 | Parts by mass | | | | |
| Plasticizer | Parts by mass | 35 | 35 | 30 | 40 |
| Aromatic modified terpene resin | Parts by mass | 5 | 5 | 5 | 5 |
| Total of liquid BR and plasticizer | (part by mass) | (45) | (45) | (45) | (55) |
| Proportion of liquid BR in the above | (-) | (0.22) | (0.22) | (0.33) | (0.27) |
| Shape of end portion on inner side in width direction of middle land portion | | Straight | Straight | Straight | Straight |
| Shape of end portion on outer side in width direction of middle land portion | | Straight | Straight | Straight | Straight |
| Sipe shape of middle land portion | | Straight | Straight | Straight | Straight |
| Resistance to change over time | Index value | 101 | 101 | 103 | 102 |
| Wear resistance | Index value | 104 | 100 | 104 | 103 |
| Chipping resistance | Index value | 102 | 100 | 101 | 100 |
| Performance on snow | Index value | 99 | 103 | 102 | 102 |

**[Table 2-1]**

| (Blend) | | Comparative Example 2 | Comparative Example 3 | Comparative Example 4 | Comparative Example 5 |
|---|---|---|---|---|---|
| SBR-1 | Parts by mass | | 70 | 70 | 70 |
| SBR-2 | Parts by mass | 70 | | | |
| BR | Parts by mass | 30 | 30 | 30 | 30 |
| Silica-1 | Parts by mass | 110 | 110 | 110 | 80 |
| Carbon black | Parts by mass | 10 | 10 | 10 | 10 |
| Coupling agent | Parts by mass | 8.8 | 8.8 | 8.8 | 6.4 |
| Liquid BR-1 | Parts by mass | 10 | | 10 | 10 |
| Liquid BR-2 | Parts by mass | | 10 | | |
| Plasticizer | Parts by mass | 35 | 35 | 40 | 35 |
| Aromatic modified terpene resin | Parts by mass | 5 | 5 | | 5 |
| Total of liquid BR and plasticizer | (part by mass) | (45) | (45) | (50) | (45) |
| Proportion of liquid BR in the above | (-) | (0.22) | (0.22) | (0.20) | (0.22) |
| Shape of end portion on inner side in width direction of middle land portion | | Straight | Straight | Straight | Straight |
| Shape of end portion on outer side in width direction of middle land portion | | Straight | Straight | Straight | Straight |
| Sipe shape of middle land portion | | Straight | Straight | Straight | Straight |
| Resistance to change over time | Index value | 102 | 108 | 105 | 101 |
| Wear resistance | Index value | 94 | 98 | 100 | 97 |
| Chipping resistance | Index value | 93 | 92 | 98 | 99 |
| Performance on snow | Index value | 97 | 98 | 99 | 103 |

**[Table 2-2]**

| (Blend) | | Comparative Example 6 | Comparative Example 7 | Comparative Example 8 | Comparative Example 9 |
|---|---|---|---|---|---|
| SBR-1 | Parts by mass | 70 | 70 | 70 | 70 |
| SBR-2 | Parts by mass | | | | |
| BR | Parts by mass | 30 | 30 | 30 | 30 |
| Silica-1 | Parts by mass | 160 | 110 | 110 | 110 |
| Carbon black | Parts by mass | 10 | 10 | 10 | 10 |
| Coupling agent | Parts by mass | 12.8 | 8.8 | 8.8 | 8.8 |
| Liquid BR-1 | Parts by mass | 10 | 7 | 25 | 10 |
| Liquid BR-2 | Parts by mass | | | | |
| Plasticizer | Parts by mass | 35 | 38 | 20 | 35 |
| Aromatic modified terpene resin | Parts by mass | 5 | 5 | 5 | 15 |
| Total of liquid BR and plasticizer | (part by mass) | (45) | (45) | (45) | (45) |
| Proportion of liquid BR in the above | (-) | (0.22) | (0.16) | (0.56) | (0.22) |
| Shape of end portion on inner side in width direction of middle land portion | | Straight | Straight | Straight | Straight |
| Shape of end portion on outer side in width direction of middle land portion | | Straight | Straight | Straight | Straight |
| Sipe shape of middle land portion | | Straight | Straight | Straight | Straight |
| Resistance to change over time | Index value | 101 | 105 | 101 | 98 |
| Wear resistance | Index value | 103 | 99 | 104 | 99 |
| Chipping resistance | Index value | 99 | 102 | 97 | 101 |
| Performance on snow | Index value | 96 | 98 | 102 | 97 |

**[Table 3]**

| Common formulation of rubber compositions | | |
|---|---|---|
| Zinc oxide | 3.0 | Parts by mass |
| Stearic acid | 2.0 | Parts by mass |
| Sulfur | 2.0 | Parts by mass |
| Vulcanization accelerator | 2.5 | Parts by mass |

For Tables 1 to 3, the types of used raw materials are as follows.
- SBR-1: Styrene-butadiene rubber, HP755, available from JSR Corporation, weight average molecular weight: 1050000
- SBR-2: Styrene-butadiene rubber, Nipol 1502, available from Zeon Corporation, weight average molecular weight: 450000
- BR: Butadiene rubber; Nipol BR1220, available from Zeon Corporation
- Silica-1: ZEOSIL 1165MP, available from SOLVAY, CTAB adsorption specific surface area: 160 m²/g
- Silica-2: Premium ZEOSIL 200MP, available from SOLVAY, CTAB adsorption specific surface area: 200 m²/g
- Silica-3: ZEOSIL 1115MP, available from SOLVAY, CTAB adsorption specific surface area: 115 m²/g
- Carbon black: Show Black N234, available from Cabot, nitrogen adsorption specific surface area: 115 m²/g
- Coupling agent: Sulfide-based silane coupling agent, Si69, available from Evonik Degussa, bis(triethoxysilylpropyl)tetrasulfide
- Liquid BR-1: Low molecular weight butadiene rubber, LBR 305, available from Kuraray Co., Ltd., weight average molecular weight: 30000
- Liquid BR-2: Low molecular weight butadiene rubber, LBR 302, available from Kuraray Co., Ltd., weight average molecular weight: 5000
- Plasticizer: Aroma oil, VivaTec 500, available from H&R Chemical
- Aromatic modified terpene resin: TO-125, available from Yasuhara Chemical Co., Ltd.
- Zinc oxide: Zinc Oxide III, available from Seido Chemical Industry Co., Ltd.
- Stearic acid: beads stearic acid, available from NOF Corporation
- Sulfur: Golden Flower oil treated sulfur powder (sulfur content: 95.24 mass%), available from Tsurumi Chemical Industry Co., Ltd.
- Vulcanization accelerator: NOCCELER CZ-G (CZ), available from Ouchi Shinko Chemical Industrial Co., Ltd.

As can be seen from Tables 1 and 2, it was confirmed that Examples 1 to 6 achieved excellent resistance to change over time, wear resistance, chipping resistance, and performance on snow.

In Comparative Example 1, since no low molecular weight butadiene rubber was blended, resistance to change over time, wear resistance, chipping resistance, and performance on snow were poor.

In Comparative Example 2, since the weight average molecular weight of the styrene-butadiene rubber was less than 800000, wear resistance, chipping resistance, and performance on snow were poor.

In Comparative Example 3, since the weight average molecular weight of the low molecular weight butadiene rubber was less than 10000, resistance to change over time, wear resistance, chipping resistance, and performance on snow were poor.

In Comparative Example 4, since no thermoplastic resin was blended, resistance to change over time, chipping resistance, and performance on snow were poor.

In Comparative Example 5, since the blended amount of the silica was less than 100 parts by mass, wear resistance was poor.

In Comparative Example 6, since the blended amount of the silica was more than 150 parts by mass, performance on snow was poor.

In Comparative Example 7, since the blended amount of the low molecular weight butadiene rubber was less than 10 parts by mass, resistance to change over time and performance on snow were poor.

In Comparative Example 8, since the blended amount of the low molecular weight butadiene rubber was more than 20 parts by mass, chipping resistance was poor.

In Comparative Example 9, since the blended amount of the thermoplastic resin was more than 9 parts by mass, performance on snow was poor.

## Claims

1. A pneumatic tire comprising:
a rubber composition for a tire,
the rubber composition containing, per 100 parts by mass of a diene rubber containing from 50 to 70 mass% of a styrene-butadiene rubber having a weight average molecular weight of 800000 or greater and from 30 to 50 mass% of a butadiene rubber, from 100 to 150 parts by mass of silica, from 10 to 20 parts by mass of a low molecular weight butadiene rubber having a weight average molecular weight of 10000 or greater and 50000 or less, from 2 to 9 parts by mass of a thermoplastic resin, and a plasticizer, and
a total of the low molecular weight butadiene rubber and the plasticizer being from 40 to 70 parts by mass.

2. The pneumatic tire according to claim 1, wherein a mass ratio of the low molecular weight butadiene rubber is 0.1 or more and 0.4 or less with respect to the total of the low molecular weight butadiene rubber and the plasticizer.

3. The pneumatic tire according to claim 1 or 2, wherein a CTAB adsorption specific surface area of the silica is 130 m²/g or greater and 180 m²/g or less.

4. The pneumatic tire according to any one of claims 1 to 3, wherein
a tread pattern of the pneumatic tire comprises three or more circumferential main grooves extending in a tire circumferential direction, and a land portion defined by two of the circumferential main grooves that are adj acent,
an end portion on an outer side in a tire width direction of the land portion has a zigzag shape having a position periodically changing in the tire width direction, and an edge on an inner side in the tire width direction of the land portion has a straight shape,
a plurality of lug grooves are provided in the land portion, and between the lug grooves that are adjacent, a sipe extending continuously from the end portion on the outer side in the tire width direction to the end portion on the inner side in the tire width direction is provided,
the sipe has a substantially Z-shape having two bent portions, and the bent portions are located on the inner side in the tire width direction than a center line in the tire width direction of the land portion.
